# EUROPEAN PATENT APPLICATION

(11) **EP 1 992 982 A1**
(43) Date of publication of application: **19.11.2008**
(21) Application number: 08380143.1
(22) Date of filing: 08.05.2008
(51) Int. Cl.: G02C 13/00

(54) **Device for cleaning of lens and similar goods**

(30) Priority: 08.05.2007 ES 200700955
(71) Applicant: Shark Tecnology, S.L., 28220 Majadahonda (ES)
(72) Inventor: Alberto arama de la fuente, 28220 Majadahonda-Madrid (ES)
(74) Representative: Asensio Fernandez-Castanys, Trinidad

(57) **Abstract**

The invention consists of a device for cleaning of lens and similar goods easy to use, functionally efficient and without possibility to slide off the fingers that manipulate it assuring the cleaning of different objects. Therefore, it is constituted by a thin piece of textile material (1) with appropriate characteristics to clean by rubbing the polished surfaces of the lenses of eyeglasses without damaging or scratching it; with the particularity that over the perimeter of such main layer piece there arc two sectors fixed in such way that they face each other (3), establishing on the piece fixed to the base piece, edges facing each other (4) and spaced so that they form an opening (5) to introduce the thumb in one cavity and the index and middle fingers in the other.

## Description

### OBJECTIVE OF THE INVENTION

The invention hereby is a device for cleaning of lens and similar goods, precisely the cleaning of lenses of eyeglasses; however, it can also be used to clean delicate surfaces such as compact discs, DVDs, etc., or any other kind of surface that must be cleaned without damaging by scratching it.

The objective of the invention is to offer an easy-to-use device, efficient, and able to remain with the fingers during the cleaning process of the objects.

### INVENTION BACKGROUND

Lenses of eyeglasses require periodic cleaning to optimize the vision conditions that are obviously decreased by the dirt deposits originated on such lenses, in some instances due to the dust in the environment, in other instances due to manual contact, in others due to the vapor expelled by the eyes of the user, etc.

As it is also known, the cleaning of lenses of eyeglasses are usually done with very soft and especial cloths in order to avoid scratching or damaging the polished surface of the lens.

Those cloths, logically, are handled with the fingers that place it on both sides of the lenses and rub them from side to side so that the cloth cleans it. This system has a drawback that sometimes, because of the nature of the cleaning cloth, allows the finger to move over it and it is not capable of sliding it so that it cleans the surface, resulting on the touching of the lenses by the fingers making it dirty instead of cleaning it.

There are also other devices based on a kind of tweezers whose ends are covered with little pads facing each other and whose surface is materialized by the classic cleaning cloth for cleaning lenses, in such way that both pads are placed on one side and the other of the lenses cleaning them by rubbing them; meaning that this is done by manually sliding the little pads of the tweezers, therefore keeping the contact between the cleaning device with the lens surface; this device is not commonly used due to its considerable size and difficulty to be carried by the user.

### DESCRIPTION OF THE INVENTION

The device hereby recommended, has been conceived to resolve the problem previously mentioned based on a simple solution but greatly efficient, because it will totally guarantee what the classic cleaning cloth and the comfort of the cleaning tweezers-like devices do.

More specifically, the device of this invention is constituted by a layer of material of 100% polyester microfibers. On one of the sides there are two sectors of the same or different material, but always presented as layers, so that such sectors are attached to the base layer piece through a seam or any other appropriate system but always leaving a section unattached and having both unattached borders of the two attached sectors to the base facing each other, creating an opening to introduce the fingers of the user to one and the other side, specifically the thumb on one side and the index and middle fingers on the other, to establish a means of grasping of the device and to be able to clean the lenses of the eyeglasses by only putting pressure on both sides of the folding and through manipulation of the fingers.

Preferably, the main layer is circular and the attached sectors have circular segment shape whose inner edge is straight or concave, occupying a big portion of the main circular piece mentioned before except from a section that will determine the opening for the introduction of the fingers, as stated before.

The free edges of the sectors attached to the main layer piece can be soft or can be scalloped with a serrated finish, with the purpose of obtaining a more esthetic finish, and their attachment to the main layer can be done through a seam, glue, etc.

Thus, there are two compartments for the fingers in the device described above, whose opening is formed by the free edges of the two sectors attached to the main layer piece and used as cleaning surface for lenses of, for example eyeglasses or for the cleaning of any other object or device of polished surface and small in size because, regarding the circular edge and as preference for this invention, the device could have approximately 9 to 10 cm of diameter and the opening for the fingers approximately 1 or 2 cm.

Finally, the material used for the cleaning layer piece is made of 100% polyester microfiber, which is a textile structure of interlock stitch of double needle bed and fine seams.

### DESCRIPTION OF THE DRAWINGS

To complement the previous description and with the purpose of helping to a better understanding of the characteristics of the invention, according to a practical example of it and as integral part of the description, comes a set of illustrative and not limited drawings that represent the following:
Figure 1 - Shows a flat view of the device for cleaning lenses of eyeglasses, presented according to the subject of the invention herein.
Figure 2 - Shows a diametrical section view correspondent to the A-B cutting line of the previous figure.

### PREFERABLE MAKING OF THE INVENTION

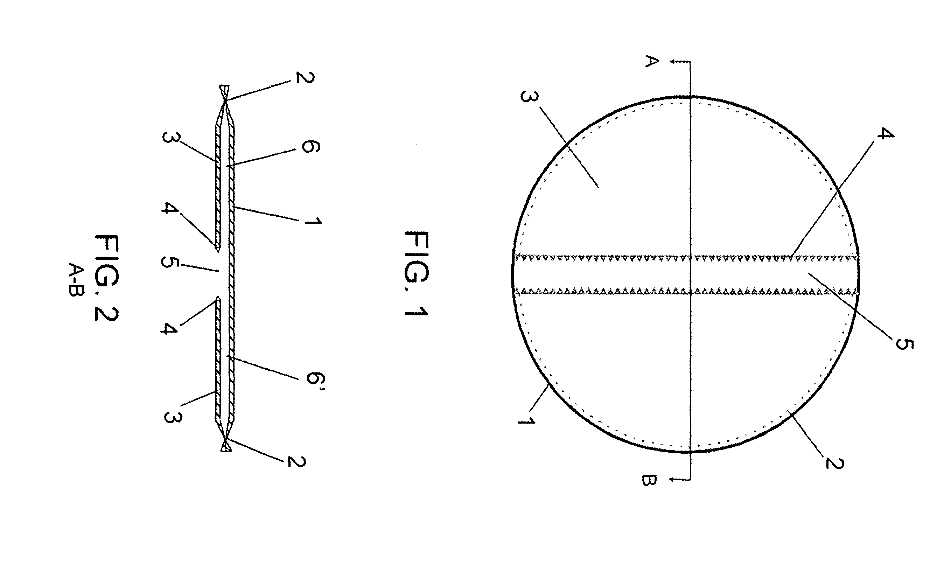

As seen on the previous figures, the device of the invention is formed by a layer piece (1) of textile nature with appropriate characteristics to allow performing the cleaning of the lenses of the eyeglasses or the like without scratching or damaging the lenses. It has been planned that this layer and textile piece (1), even though it could have any geometric configuration, be circular, and that it has sectors or textile pieces (3) of equal or different nature over its perimeter, in correspondence with one of its faces, specifically the superior one, attached by seams (2) or any other appropriate system, so that they are attached to the perimeter of the main piece (1), as represented on figure 1, leaving a free straight edge (4) on each sector so that the edge (4) could be smooth or scalloped as represented on figure 1, or have any serrated finish, etc.

In any case, the free edges (4) of the sectors (3) attached to the main or layer piece (1) face each other and are spaced between them by an opening (5) through which the fingers can be introduced, specifically the thumb in one of the cavities (6) determined by one of the sectors (3) and the layer piece (1), and the index and middle fingers in the other cavity or space (6') determined by the other sector (3) with the other side of the layer piece (1); so that once the fingers are introduced as referred before and through the folding of the device, specifically with the main layer (1), this can be placed on both sides of the lenses to be cleaned, and through the movement to one side and the other, or with circular movement, perform the intended cleaning without any possibility that the device could slide off the fingers when these are placed in the cavities (6) and (6'), with which the cleaning would be efficient, fast and comfortable. Besides the device being formed by the superposition of two textile pieces, this would take minimum volume and could be carried either in the conventional case of the eyeglasses or in any other appropriate place without becoming a hindrance.

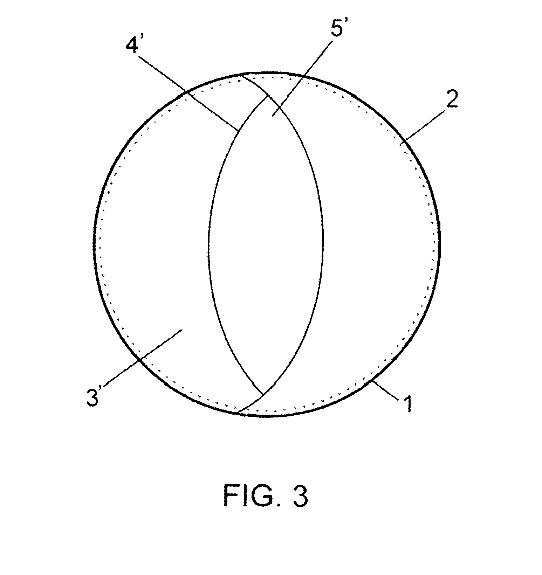

As seen on figure 3, the free edges (4') of the sectors (3') attached to the main or layer piece (1) can adopt different configurations, for instance in a concave curve shape, establishing an opening (5) through which the fingers can be introduced without affecting the essence of the invention.

## Claims

1. st - Device for cleaning of lens and similar goods, planned to clean polished surfaces of lenses, eyeglasses or even other polished objects on which it is susceptible the application of the device, **characterized by** a thin layer of textile (1) with appropriate characteristics to be able to clean by rubbing the polished surfaces of the lenses of eyeglasses without damaging or scratching them; with the particularity that there are two sectors facing each other (3) over the perimeter of such main layer piece, setting on the piece not fixed to the base piece, opposite and spaced edges (4) so that it forms an opening (5) to introduce the thumb in one cavity and the index and middle fingers in the other.

2. nd - Device for cleaning of lens and similar goods, according to the 1^{st} claim, **characterized by** sectors (3) fixed to the main cleaning piece (1) which are also layers and susceptible to be constituted by the same material or other appropriate textile material.

3. rd - Device for cleaning of lens and similar goods. According to previous claims, the cleaning layer piece (1) is preferably of circular shape, while the perimetrically fixed sectors (3) are of circular segment shape, with a straight inner edge (4), concave curved, or any other configuration corresponding to any design line, fixed by a seam (2) or any other appropriate means through its curved section to the perimetrical edge of the layer piece, while the straight borders (4) and free from the segmented shaped sectors define an opening in the front part (5) appropriately wide to allow the introduction of the thumb in one of its cavities and the index and middle fingers in the other.

4. ^{th} - Device for cleaning of lens and similar goods. According to previous claims, **characterized by** the layer piece (1), as cleaning surface, is constituted in textile material of 100% polyester microfiber.
